# EUROPEAN PATENT SPECIFICATION

(11) **EP 3 420 045 B1**
(45) Date of publication and mention of the grant of the patent: **22.04.2026**
(21) Application number: 17708139.5
(22) Date of filing: 21.02.2017
(51) Int. Cl.: C09J 183/04, C08L 83/04

(54) **SELECTIVE ADHESION SILICONE RUBBER**
SILIKONKAUTSCHUK MIT SELEKTIVER HAFTUNG
CAOUTCHOUC SILICONE À ADHÉRENCE SÉLECTIVE

(30) Priority: 23.02.2016 US 201662298499 P
(43) Date of publication of application: 02.01.2019
(73) Proprietor: Dow Silicones Corporation, Midland, MI 48686-0994 (US)
(72) Inventor: BEYER, Patrick, 55128 Mainz (DE); DINNINGER, Chad, Saint Charles, Michigan 48655 (US); GIBAS, Roger, Bay City, Michigan 48708-7739 (US); KENNAN, John, Midland, Michigan 48640 (US); WOLF, Hans Peter, 65835 Liederbach (DE)
(74) Representative: Elkington and Fife LLP
(86) International application number: PCT/US2017/018687
(87) International publication number: WO 2017/147061

(56) References cited:
- US-A- 5 371 163
- US-A1- 2011 224 344
- US-A1- 2014 150 972
- US-A1- 2015 259 585
- US-B2- 7 045 586

## Description

The present invention relates to a selective adhesion liquid silicone elastomer compositions which can cure at temperatures < 140°C. Also included is a process for preparing cured silicone elastomer and articles and composite parts made from said selective adhesion liquid silicone elastomer compositions.

Liquid curable silicone elastomer compositions typically cure or react to provide for cured silicone elastomers, also known as silicone rubbers. The terms silicone elastomer and silicone rubber are typically used interchangeably. Liquid curable silicone elastomer compositions include platinum cured silicone elastomers (addition reaction, otherwise known as hydrosilylation).

Organopolysiloxanes may generally be described as polymers having multiple units of the formula (I):

RₐSiO_{(4-a)/2} (I)

in which R is independently selected from hydrogen, aliphatic hydrocarbyl, aromatic hydrocarbyl, or organyl group (that is any organic substituent group, regardless of functional type, having one free valence at a carbon atom). Saturated aliphatic hydrocarbyls are exemplified by, but not limited to alkyl groups such as methyl, ethyl, propyl, pentyl, octyl, undecyl, and octadecyl and cycloalkyl groups such as cyclohexyl. Unsaturated aliphatic hydrocarbyls are exemplified by, but not limited to, alkenyl groups such as vinyl, allyl, butenyl, pentenyl, cyclohexenyl and hexenyl; and by alkynyl groups. Aromatic hydrocarbon groups are exemplified by, but not limited to, phenyl, tolyl, xylyl, benzyl, styryl, and 2-phenylethyl. Organyl groups are exemplified by, but not limited to, halogenated alkyl groups such as chloromethyl, 3-chloropropyl, and 3,3,3-trifluoropropyl; nitrogen containing groups such as amino groups, amido groups, imino groups, imido groups; oxygen containing groups such as polyoxyalkylene groups, carbonyl groups, alkoxy groups and hydroxyl groups. Further organyl groups may include sulfur containing groups, fluor containing groups, phosphorus containing groups, boron containing groups. The subscript "a" is an integer of from 0 to 3.

Siloxy units may be described by a shorthand (abbreviated) nomenclature, namely - "M," "D," "T," and "Q," when R is a methyl group (further teaching on silicone nomenclature may be found in Walter Noll, Chemistry and Technology of Silicones, dated 1962, Chapter I, pages 1-9). The M unit corresponds to a siloxy unit where a = 3, that is R₃SiO_{1/2}; the D unit corresponds to a siloxy unit where a = 2, namely R₂SiO_{2/2}; the T unit corresponds to a siloxy unit where a = 1, namely R₁SiO_{3/2}; and the Q unit corresponds to a siloxy unit where a = 0, namely SiO_{4/2}.

In some instances, the silicone elastomer may be overmoulded onto other parts made of different or same materials or may be coated on textile or fabric. For example, a silicone surface may be overmoulded onto a polyethylene telephone housing, or a polyurethane automobile dashboard. Further examples include an airbag fabric coated with a silicone elastomer.

Selective adhesion liquid silicone rubber (also referred to as "SA LSR") refers to liquid silicone elastomer products that incorporate some level or form of adhesion promoter to build unprimed (or primer free) adhesion to a first type of substrate while exhibiting minimal adhesion to a second type of substrate, thereby the "selective" adhesion qualification. The first type of substrate may include plastic substrates, while the second type of substrate may include metal substrates such as those surfaces of the moulds used to shape silicone rubber products. The adhesion is spontaneously developed during the curing process, without the need to rely on a primer material.

Examples of such SA LSR include those disclosed in US4677161 where the adhesion promoter is a polysiloxane comprising diorganohydrogensiloxy, alkoxy and SiO_{4/2} units; and those disclosed in US4906686 where the adhesion promoter is a mixture, or reaction product, of (a) a silicon-free compound which contains at least 1 alcoholic hydroxyl group and at least 1 alkenyl group in each molecule, and (b) an organosilane having in each molecule at least 1 alkoxy group and at least 1 epoxy or methacryloxy or acryloxy group.

US6663967 discloses a curable organopolysiloxane polymer system having selective adhesion to a substrate, said system containing the following components: (A) an organopolysiloxane polymer; (B) an organohydrogenpolysiloxane crosslinker; (C) a platinum group metal catalyst; (D) a cure inhibitor; (E) an adhesion promoter; (F) an epoxy functional compound; and (G) a trialkyl end blocked polysiloxane, where the platinum group metal catalyst is a neutralized complex of chloroplatinic acid or platinum dichloride with symdivinyltetramethyldisiloxane. The composition selectively adheres to a substrate that may be a thermoset or a thermoplastic, but not to a metal such as aluminum or steel.

US2014/0179863 relates to an addition curable silicone rubber composition having self-adhesiveness which is capable of adhering to organic resins such as polyamide, polybuthylene terephthalate (PBT), polycarbonate, polyphenylene oxide, and polyphenylene sulfide. The addition curable self-adhesive silicone rubber composition can be moulded at a relatively low temperature in a short time and has sufficient pot life for working without sacrificing its rapid curability at low temperature.

US4087585 discloses that hydroxylated, vinyl-containing polysiloxane and epoxy-containing silanes can be used to provide silicone compositions which, when cured in contact with substrates, exhibit adhesion properties.

US2015/259585 discloses a two-part curable liquid silicone curable composition comprising alkenyl terminated organosiloxanes, an organopolysiloxane having 2.0 silicon-bonded hydrogen atoms in side chains per molecule, an organopolysiloxane having two terminal silicon-bonded hydrogen atoms per molecule, a platinum catalyst and silica.

SA LSRs typically allow fabricators to adhere silicone to plastic substrates by simply injection moulding the silicone onto the surface of the plastic substrate. The use of an SA LSR avoids the need for applying an adhesive primer and costly manual assembly steps. Further, binding directly to the plastic substrate eliminates gaps between the substrates that invariably exist when mechanical interlocks are used. It is critical for this adhesive liquid silicone elastomer material to be "selective" so that it develops adhesion more rapidly to the plastic substrate than to metal surfaces such as the mold surface. This allows the fabricator to easily eject a complex part consisting of the cured liquid silicone elastomer bonded to the plastic substrate.

Such complex parts comprising an adherent layer of LSR and a plastic substrate may be found in a wide variety of applications such as automotive applications; electronics; electric connectors; medical devices; healthcare applications; cooking, baking, and food storage products; packaging products; infant products such as bottle nipples; apparel such as undergarments, sportswear, and footwear; and in home repair and hardware.

Typical properties expected from SA LSRs include low compression set; adhesion to plastic substrates of different types; low adhesion to metal; fast low temperature cure; high physical properties (tensile, elongation, and tear); tactile properties such as soft feel; chemical inertness; wear and/or scratch resistance; biocompatibility.

A typical selective adhesion liquid curable silicone elastomer composition may comprise;
- an organopolysiloxane (A) containing at least 2 alkenyl groups bonded to silicon atom per molecule,
- an organopolysiloxane (B) containing at least 2 silicon-bonded hydrogen atom per molecule,
- a platinum based catalyst (C),
- an optional inhibitor (D),
- a filler (E), and
- an optional adhesion promoter (F).

The platinum based catalyst is added in an amount sufficient to effect the cure of the organopolysiloxanes (A) and (B). The inhibitor of the platinum based catalyst is optional. It is typically used to stabilize the composition before curing is effected, by inhibiting the cure catalyst. The filler may be present to reinforce the cured silicone elastomer.

In some instances, the cured silicone elastomer may be used to overmould heat sensitive substrates. Heat sensitive substrates are those that will encounter distortion or deformation problem upon heat contact. The Vicat softening temperature and Heat Deflection (or distortion) Temperature (HDT) are different techniques describing either surface softening (Vicat) or body softening (HDT).

In the Heat Deflection Temperature method, a prismatic specimen is subjected to flexural loading and the temperature increased at a specified rate. The heat deflection temperature is achieved when the specimen deflects to a distance specified in the Standards. As this temperature naturally depends on the load applied, the specimen geometry, the heating rate and the selected deflection, the heat deflection temperature represents a value which can be used to compare different materials with each other. Heat deflection temperature measurement of plastics under temperature can be affected by internal material stresses. The method is specified in ASTM D 648-07.

The Vicat Softening Temperature was introduced to measurement technology as a substitute value for melting-point. It describes the temperature at which a circular indentor with a cross-section of 1 mm² under a standardized loading of 10 N or 50 N penetrates exactly 1 mm into the specimen (ASTM D 1525-09).

Typical heat sensitive substrates include those substrates made of materials having a Vicat Softening Temperature below 140°C and which may be impacted by a curable system applied on their surface at a temperature above 140°C. Softening Temperature for certain materials may be found in numerous literature sources, and may be exemplified as follows (for 1kg load): 92°C for polyvinyl chloride (PVC), 127.3°C for polyethylene (PE), 156.2°C for polycarbonate (PC) (further teaching on Vicat values may optionally be found on www.pvc.org).

To minimise and preferably avoid any distortion (or deformation) problems with heat sensitive substrates, the cure (or moulding) temperature of the selective adhesion liquid curable silicone elastomer composition is preferably minimised without loss of cure speed.

Typically, a reduction of the moulding temperature results in the markedly reduced curing speed of the silicone rubber, and hence, longer moulding time. Rapid cure rate is however necessary to ensure economic viability of injection mouldable systems.

Advantages of reducing the curing (or moulding) temperature are numerous and include;
- increasing the options for overmoulding of temperature sensitive substrates such as polyethylene,
- energy saving by operating at lower temperatures,
- introducing thermosensitive additives in the silicone elastomer composition, and
- reducing the thermal gradient in the injection systems.

There is still a need for selective adhesion liquid silicone (SA LSR) elastomer materials that can cure at temperatures < 140°C while rapidly developing adhesion to a plastic substrate.

The present invention relates to a selective adhesion liquid silicone rubber composition for building unprimed adhesion to a first substrate while exhibiting minimal adhesion to a second type of substrate comprising;
- an organopolysiloxane (A) containing at least 2 alkenyl groups bonded to silicon atom per molecule,
- an organopolysiloxane (B) containing at least 2 silicon-bonded hydrogen atom per molecule comprising organopolysiloxane (B1) and organopolysiloxane (B2), wherein
   ∘ organopolysiloxane (B1) contains siloxy units of the type (R₂HSiO_{1/2})ₓ where R is independently selected from hydrogen, aliphatic hydrocarbyl, aromatic hydrocarbyl, or organyl group and x ≥ 2; and
   ∘ organopolysiloxane (B2) contains siloxy units of the type (RHSiO_{2/2})_{z} where R is independently selected from hydrogen, aliphatic hydrocarbyl, aromatic hydrocarbyl, or organyl group and z ≥ 2,
- a platinum based catalyst (C),
- an inhibitor (D), selected from the group consisting of acetylenic alcohols and their derivatives,
- a silica filler (E), and
- an adhesion promoter (F), wherein organopolysiloxane (B1) is a branched polymer conforming to the general formula (II) (R₂HSiO_{1/2})ₓ(R₃SiO_{1/2})_{y}(RHSiO_{2/2})_{z}(R₂SiO_{2/2})ₚ(RSiO_{3/2})_{q}(HSiO_{3/2})ᵥ(SiO_{4/2})ᵣ (II) where R is independently selected from hydrogen, aliphatic hydrocarbyl, aromatic hydrocarbyl, or organyl group, and H is hydrogen and where x ≥ 2, y ≥ 0, z ≥ 0, p ≥ 0, v ≥ 0, and a least one of q or r ≥ 1; where the adhesion promoter (F) is selected from those silicone compounds bearing at least one reactive alkenyl group in conjunction with at least one of a reactive epoxy group or reactive acrylate group.

The present invention further relates to a process for preparing said selective adhesion liquid silicone rubber composition and composite parts made therewith.

The present invention further relates to a method for imparting selective adhesion by providing for adhesion promoter (F) in a selective adhesion liquid silicone rubber composition. Also disclosed is a method for providing for a composite part comprising said selective adhesion liquid silicone rubber composition.

The organopolysiloxane (A) may have any structure. The organopolysiloxane (A) may be a linear, branched or resinous polymer.

The organopolysiloxane (A) contains at least 2 alkenyl groups bonded to silicon atom, per molecule. Examples of alkenyl groups include vinyl, allyl, butenyl, pentenyl, cyclohexenyl and hexenyl groups. These may be pendent or terminal or at both positions, that is, they may be present on any of the siloxy units of the organopolysiloxane (A).

The viscosity of organopolysiloxane (A) at 25° C is typically within a range from 0.1 to 100 Pa.s. Unless otherwise indicated, all viscosities are measured using a rotational viscometer such as a Brookfield viscometer, or by using a capillary rheometer.

The organopolysiloxane (A) may contain phenyl groups.

The organopolysiloxane (A) may contain fluoro containing groups such as trifluoropropyl groups.

Examples of the organopolysiloxane (A) which may be used include vinyldimethylsiloxy-endblocked dimethylsiloxane-vinylmethylsiloxane copolymer, vinyldimethylsiloxy-endblocked polydimethylsiloxane, vinylmethylhydroxysiloxy-endblocked dimethylsiloxane-vinylmethylsiloxane copolymer, methylvinylcyclosiloxane comprising 3 to 8 D siloxy units, and mixtures thereof.

The organopolysiloxane (A) may be used either as a single polymer, or a combination of two or more different polymers.

The organopolysiloxane (A) is present in the composition at a level of from 45 to 89% by weight, based on the total weight of the composition, alternatively 45 to 85% by weight, alternatively 50 to 80% by weight.

The organopolysiloxane (B) containing at least 2 silicon-bonded hydrogen atom per molecule comprises organopolysiloxane (B1) containing at least 2 silicon-bonded hydrogen atom per molecule and organopolysiloxane (B2) containing at least 2 silicon-bonded hydrogen atom per molecule, wherein
∘ organopolysiloxane (B1) contains siloxy units of the type (R₂HSiO_{1/2})ₓ where R is independently selected from hydrogen, aliphatic hydrocarbyl, aromatic hydrocarbyl, or organyl group and x ≥ 2; and
∘ organopolysiloxane (B2) contains siloxy units of the type (RHSiO_{2/2})_{z} where R is independently selected from hydrogen, aliphatic hydrocarbyl, aromatic hydrocarbyl, or organyl group and z ≥ 2.

The organopolysiloxane (B1), containing at least 2 silicon-bonded hydrogen atom per molecule, is a branched polymer conforming to the general formula (II)

(R₂HSiO_{1/2})ₓ (R₃SiO_{1/2})_{y} (RHSiO_{2/2})_{z} (R₂SiO_{2/2})ₚ (RSiO_{3/2})_{q} (HSiO_{3/2})ᵥ (SiO_{4/2})ᵣ (II)

where R is as described above (independently selected from hydrogen, aliphatic hydrocarbyl, aromatic hydrocarbyl, or organyl group), and H is hydrogen and
where x ≥ 2, y ≥ 0, z ≥ 0, p ≥ 0, v ≥ 0, and at least one of q or r ≥ 1; alternatively x ≥ 2, y ≥ 0, z ≥ 0, p ≥ 0, q ≥ 0; v ≥ 0, r ≥ 1; alternatively, x ≥ 2, y ≥ 0, r ≥ 1 (with the proviso that when r = 1, x + y = 4) and z, p, q, v = 0. Alternatively, x > 2, y > 0, r > 1 and z, p, q, v = 0.

In all instances, the organopolysiloxane (B1) containing at least 2 silicon-bonded hydrogen atom per molecule, carries the at least 2 silicon-bonded hydrogen atom on the so-called "M" unit, represented by the formula (R₂HSiO_{1/2}), also abbreviated M^{H}, indicating one M siloxy unit contains at least 1 silicon-bonded hydrogen atom.

In some instances, the organopolysiloxane (B1) containing at least 2 silicon-bonded hydrogen atom per molecule on the so-called "M" unit, may additionally carry silicon-bonded hydrogen atoms on the so-called D unit, represented by the formula (RHSiO_{2/2}), also abbreviated D^{H}, indicating the D siloxy unit contains at least 1 silicon-bonded hydrogen atom.

Methods to obtain the organopolysiloxane (B1) containing at least 2 silicon-bonded hydrogen atom per molecule are known in the art. One example of such method is disclosed in EP0251435 concerned with a method for making siloxane resins containing silicon-bonded hydrogen atoms.

Examples of organopolysiloxane (B1) containing at least 2 silicon-bonded hydrogen atom per molecule include compounds of formula (R'₂HSiO_{1/2})ₓ(SiO_{4/2})ᵣ, where R' is a methyl group, and the ratio x:r ranges of from 0.2:1 to 4:1; in some instances, x may range of from 6 to 10 and r may range of from 3 to 6.

The viscosity of organopolysiloxane (B1) at 25° C is not critical. The viscosity of organopolysiloxane (B1) at 25° C may range of from 0.1 to 1000 mPa.s.

The organopolysiloxane (B1) is present in the composition at a level of from 0.1 to 10% by weight, based on the total weight of the composition, alternatively of from 0.1 to 5% by weight.

The organopolysiloxane (B1) is present in the composition in an amount such that a molar ratio of silicon-bonded hydrogen atoms in component (B1) relative to silicon-bonded hydrogen atoms in component (B) is of from 0.1:1 to 0.9:1, alternatively of from 0.3:1 to 0.7:1, alternatively of from 0.4:1 to 0.6:1.

The organopolysiloxane (B1) containing at least 2 silicon-bonded hydrogen atom per molecule may be a single compound or a mixture of compounds, where the silicon-bonded hydrogen atoms are found on the so-called M siloxy unit, and as further defined above.

The organopolysiloxane (B2) containing at least 2 silicon-bonded hydrogen atom per molecule, is different from organopolysiloxane (B1). Organopolysiloxane (B2) containing at least 2 silicon-bonded hydrogen atom is typically a linear polymer, based mainly on M and D units, substantially free of T or Q units.

Organopolysiloxane (B2) containing at least 2 silicon-bonded hydrogen atom per molecule may be described by formula (III)

(R₂HSiO_{1/2})ₓ (R₃SiO_{1/2})_{y} (RHSiO_{2/2})_{z} (R₂SiO_{2/2})ₚ(RSiO_{3/2})_{q} (III)

Where R is as described above,
Where x ≥ 0, y ≥ 0, z ≥ 2, p ≥ 0, q ≥ 0 with the proviso that x + y ≥ 2; alternatively, x = 0, y = 2, z ≥ 2, p ≥ 0, q = 0.

In all instances, the organopolysiloxane (B2) containing at least 2 silicon-bonded hydrogen atom per molecule carries the silicon-bonded hydrogen atoms on D siloxy units.

In some instances, the organopolysiloxane (B2) containing at least 2 silicon-bonded hydrogen atom per molecule on the D siloxy unit, may additionally carry silicon-bonded hydrogen atoms on the M unit.

The viscosity of organopolysiloxane (B2) at 25° C may range of from 0.1 to 1000 mPa.s.

The organopolysiloxane (B2) is present in the composition at a level of from 0.1 to 10% by weight, based on the total weight of the composition, alternatively of from 0.1 to 5% by weight.

The ratio of hydrogen in organopolysiloxane (B) / (alkenyl groups in organopolysiloxane (A) (also SiH/SiAlk ratio) is > 1.8:1, alternatively ≥ 2.2:1, alternatively ≥ 2.8:1. Typical liquid silicone elastomer materials usually employ excess of hydrogen functional siloxane with SiH/SiAlk ratios ranging from 1.2:1 to 1.8:1. The inventors have found that adhesion is significantly enhanced if ratios of SiH/SiAlk > 1.8:1 are employed. The SiH/SiAlk ratio should however remain < 10:1, alternatively < 6:1, so that the physical properties of the cured silicone elastomer are not impaired. The alkenyl group in the calculation of SiH/SiAlk ratio may be a vinyl group.

Addition-reaction catalysts are well known in the art. These include catalysts selected form the platinum group metals, or transition metals, of the periodic table of the elements, such as platinum, ruthenium, rhodium, palladium, osmium and iridium; and compounds thereof.

The catalyst used in the scope of the present invention may be selected from the platinum group catalysts, such as chloroplatinic acid, chloroplatinic acid dissolved in an alcohol or a ketone and these solutions which have been ripened, chloroplatinic acid-olefin complexes, chloroplatinic acid-alkenylsiloxane complexes, chloroplatinic acid-diketone complexes, platinum black, platinum supported on a carrier, and mixtures thereof.

The catalyst (C) is added in a quantity sufficient to cure the organopolysiloxane (A) and the organopolysiloxane (B) present in the composition. For example, it may be added in a quantity of platinum atom that provides of from 0.1 to 500 weight-ppm (parts per million), alternatively of from 1 to 200 weight-ppm, alternatively of from 1 to 100 weight-ppm, of platinum atom in the catalyst (C) based on the total weight of reactive organopolysiloxanes (A) and (B).

Inhibitors of platinum based catalyst are well known in the art. Addition-reaction inhibitors include hydrazines, triazoles, phosphines, mercaptans, organic nitrogen compounds, acetylenic alcohols, silylated acetylenic alcohols, maleates, fumarates, ethylenically or aromatically unsaturated amides, ethylenically unsaturated isocyanates, olefinic silanes, olefinic siloxanes, unsaturated hydrocarbon monoesters and diesters, conjugated ene-ynes, hydroperoxides, nitriles, and diaziridines.

The inhibitors (D) used in the scope of the present invention may be selected from the group consisting of acetylenic alcohols and their derivatives, containing at least one unsaturated bond. Examples of acetylenic alcohols and their derivatives include 1-ethynyl-1-cyclohexanol (ETCH), 2-methyl-3-butyn-2-ol, 3-butyn-1-ol, 3-butyn-2-ol, propargylalcohol, 2-phenyl-2-propyn-1-ol, 3,5-dimethyl-1-hexyn-3-ol, 1-ethynylcyclopentanol, 3-methyl-1-penten-4-yn-3-ol, and mixtures thereof. Derivatives of acetylenic alcohol may include those compounds having at least one silicon atom.

Alternatively, the inhibitor (D) is selected from the group consisting of 1-ethynyl-1-cyclohexanol, 2-methyl-3-butyn-2-ol, 3-butyn-1-ol, 3-butyn-2-ol, propargylalcohol, 2-phenyl-2-propyn-1-ol, 3,5-dimethyl-1-hexyn-3-ol, 1-ethynylcyclopentanol, and mixtures thereof.

The inhibitor (D) may typically be an acetylenic alcohol where the unsaturated bond group in is in a terminal position, and further, a methyl or phenyl group may be at the alpha position. The inhibitor (D) may be selected from the group consisting of 1-ethynyl-1-cyclohexanol, 2-methyl-3-butyn-2-ol, 3-butyn-1-ol, 3-butyn-2-ol, propargylalcohol, 2-phenyl-2-propyn-1-ol, and mixtures thereof.

The inhibitor (D) may be added in the range of from 10 to 50,000 weight-ppm in the silicone elastomer composition.

The inhibitor (D) is present in an amount providing a molar ratio of inhibitor to the platinum atom of from 10 to 500 (10:1 to 500:1), alternatively of from 50 to 500 (50:1 to 500:1), alternatively of from 100 to 500 (100:1 to 500:1).

The silica filler (E) suitable for the present invention may have a specific surface area measured by BET method of at least 50 m²/g up to 450 m²/g. Examples of silica filler include precipitated silica (wet silica), fumed silica (dry silica), calcined silica, and the like. The silica filler may be surface-treated, hydrophilic or hydrophobic. The silica may contain alkenyl group on its surface. Other fillers may include nanofillers.

In some instances, the silica contains alkenyl group on its surface. Methods to provide alkenyl groups on silica are known in the art.

The silica filler is present in the composition in an amount of from 10 to 40% by weight, based on the total weight of the composition.

The adhesion promoter (F) is selected from those silicone compounds bearing at least one reactive alkenyl group in conjunction with at least one of a reactive epoxy group or reactive acrylate group. Reactive alkenyl groups include vinyl and hexenyl groups. Reactive epoxy groups include glycidoxy propyl, beta(3,4-epoxycyclohexyl)ethyl groups. Reactive acrylate groups include (meth)acrylate, methyl(meth)acrylate.

The adhesion promoter (F) may be the reaction product of an hydroxyl-functional siloxane bearing either one of a reactive alkenyl group, a reactive epoxy or acrylate group with a silane or siloxane bearing either one of a reactive alkenyl group, a reactive epoxy or a reactive acrylate group, provided the resulting adhesion promoter bears at least one reactive alkenyl group in conjunction with at least one of a reactive epoxy group or reactive acrylate group.

The adhesion promoter (F) may be the reaction product of an hydroxyl-functional siloxane bearing at least one reactive alkenyl group with a silane or siloxane bearing either one of a reactive epoxy or a reactive acrylate group.

The adhesion promoter (F) may be the reaction product of an alkenyl-functional siloxane bearing at least one reactive alkenyl group with a silane or siloxane bearing either one of a reactive epoxy or a reactive acrylate group, provided at least one alkenyl group remains unreacted.

Examples of hydroxyl-functional siloxane bearing at least one reactive alkenyl group include vinylmethylsiloxanes or vinylmethylsiloxane-dimethylsiloxane copolymers having terminal silanol, having a viscosity of from 1 to 500 mPa.s at 25°C.

Examples of silane bearing at least one reactive epoxy group include glycidoxypropyltrimethoxysilane, glycidoxypropyltriethoxysilane, epoxyhexyltriethoxysilane, (glycidoxypropyl)methyldiethoxysilane, (epoxycyclohexyl)ethyltrimethoxysilane.

Examples of silane bearing at least one reactive acrylate group include (meth)acryloxypropyl)trimethoxysilane, (meth)acryloxymethyltrimethoxysilane, (meth)acryloxypropyltriethoxysilane, ((meth)acryloxymethyl)methyl-diethoxysilane, (meth)acryloxypropyldimethylmethoxysilane.

Examples of siloxane bearing at least one reactive epoxy group include epoxypropoxypropyl terminated polydimethylsiloxane, (epoxypropoxypropyl methylsiloxane)-(dimethylsiloxane) copolymer, epoxypropoxypropyl terminated polyphenylmethylsiloxane, epoxypropylether terminated siloxane.

Examples of siloxane bearing at least one reactive acrylate group include methacryloxypropyl terminated polydimethylsiloxane, methacryloxypropyl terminated branched polydimethylsiloxanes, (methacryloxypropyl)methylsiloxane - dimethylsiloxane copolymers, methacryloxypropyl T-structure siloxane.

Examples of adhesion promoters (F) include the compounds of formula (IV)

[(R¹O)₂R²SiO_{1/2}]_{w} [(R¹O)R²SiO]ᵤ (R²SiO_{3/2})ₛ (R³₂SiO)ₜ(MeViSiO)ₘ (IV)

where R¹ may be alkyl, hydrogen, or indicate attachment to other siloxane groups; R² is an aliphatic group bearing an epoxy moiety; R³ is alkyl; Me is methyl and Vi is an alkenyl group, such as a vinyl group, and where w ≥ 0, u ≥ 0, s ≥ 0, t ≥ 0 and m > 0 provided that w + s ≥ 1.

An example of such adhesion promoter (F) may be prepared by the equilibration reaction of a OH terminal poly(dimethylsiloxane-co-methylvinylsiloxane) with glycidoxypropyltrimethoxysilane; where the resulting adhesion promoter (F) has a viscosity of 15 mPa.s (at 25°C), a vinyl content of 5.9 wt.%, and an epoxide equivalent weight of 400. Methanol and other by products are removed from the reaction product.

A further example of such adhesion promoter (F) may be prepared by the equilibration reaction of a OH terminal poly(dimethylsiloxane-co-methylvinylsiloxane) with beta-(3,4-epoxycyclohexyl)ethyltrimethoxysilane; where the resulting adhesion promoter (F) has a viscosity of 216 mPa.s (at 25°C) and a vinyl content of 5.13 wt.%.

Adhesion promoters other than adhesion promoter (F) may also be used, in conjunction with adhesion promoter (F), such as acrylic or methacrylic compounds, silane coupling agents like, among others, methyltrimethoxysilane, vinyltrimethoxysilane, allyltrimethoxysilane, and 1,6-bis(trimethylsilyl)hexane.

The adhesion promoter (F) is present in the composition in an amount of from 0.1 to 5% by weight, based on the total weight of the composition, alternatively 0.1 to 3% by wt.

Additives may be present in the composition depending on the intended use of the curable silicone elastomer composition. Examples of additives include electrical conductive fillers, thermally conductive fillers, non-conductive filler different from silica filler (E), pot life extenders, flame retardants, pigments, lubricants, diluents, solvents, UV light stabilizers, mold release agents, bactericides, wetting agent, heat resistant agent, and plasticizer.

Examples of electrical conductive fillers include metal particles, metal oxide particles, metal-coated metallic particles (such as silver plated nickel), metal coated non-metallic core particles (such as silver coated talc, or mica or quartz) and a combination thereof. Metal particles may be in the form of powder, flakes or filaments, and mixtures or derivatives thereof.

Examples of thermally conductive fillers include boron nitride, alumina, metal oxides (such as zinc oxide, magnesium oxide, aluminium oxide), graphite, diamond, and mixtures or derivatives thereof.

Examples of non-conductive fillers, different from silica filler (E), include quartz powder, diatomaceous earth, talc, clay, calcium carbonate, magnesium carbonate, hollow glass, glass fibre, hollow resin and plated powder, and mixtures or derivatives thereof.

Examples of pot life extenders include triazole.

Examples of chain extender include straight chain organopolysiloxanes containing 2 silicon-bonded hydrogen groups on the terminal position. Such chain extender is different from any of organopolysiloxane (B1) or organopolysiloxane (B2).

Examples of flame retardants include aluminum trihydrate, chlorinated paraffins, hexabromocyclododecane, triphenyl phosphate, dimethyl methylphosphonate, tris(2,3-dibromopropyl) phosphate (brominated tris), and mixtures or derivatives thereof.

Examples of pigments include iron oxides, carbon black, and mixtures or derivatives thereof.

Examples of lubricants include tetrafluoroethylene, resin powder, graphite, fluorinated graphite, talc, boron nitride, fluorine oil, silicone oil, molybdenum disulfide, and mixtures or derivatives thereof.

Further additives include silicone fluids, such as trimethylsilyl or OH terminated siloxanes. Such trimethylsiloxy or OH terminated polydimethylsiloxanes typically have a viscosity < 150 mPa.s (at 25°C). When present such silicone fluid, or mixture of silicone fluids, may be present in the liquid curable silicone elastomer composition in an amount ranging of from 0.1 to 5% by weight, based on the total weight of the composition.

Yet further additives include alkenyl functional resin or linear siloxanes, different from organopolysiloxane (A).

The selective adhesion liquid silicone rubber composition may thus comprise;
- an organopolysiloxane (A) containing at least 2 alkenyl groups bonded to silicon atom per molecule, in an amount of from 45 to 89 % by weight, alternatively 45 to 85% by wt., alternatively 50 to 80% by wt.,
- an organopolysiloxane (B) containing at least 2 silicon-bonded hydrogen atom per molecule comprising organopolysiloxane (B1) and organopolysiloxane (B2), wherein
   ∘ organopolysiloxane (B1) contains siloxy units of the type (R₂HSiO_{1/2})ₓ where R is independently selected from hydrogen, aliphatic hydrocarbyl, aromatic hydrocarbyl, or organyl group and x ≥ 2, and as further defined above, in an amount of from 0.1 to 10% by weight, alternatively of from 0.1 to 5% by weight, and
   ∘ organopolysiloxane (B2) contains siloxy units of the type (RHSiO_{2/2})_{z} where R is independently selected from hydrogen, aliphatic hydrocarbyl, aromatic hydrocarbyl, or organyl group and z ≥ 2, in an amount of from 0.1 to 10% by weight, alternatively of from 0.1 to 5% by weight,
- a silica filler (E) in an amount of from 10 to 40% by weight,
- an adhesion promoter (F) as defined above in an amount of from 0.1 to 5% by weight, alternatively 0.1 to 3% by wt.,
- additives in an amount of from 0.1 to 10% by weight, all weights based on the total weight of the composition,
- a platinum based catalyst (C) in a quantity of platinum atom that provides of from 0.1 to 500 weight-ppm (parts per million) based on the total weight of reactive organopolysiloxanes (A) and (B), and
- an inhibitor (D), selected from the group consisting of acetylenic alcohols and their derivatives, in an amount of from 10 to 50,000 weight-ppm, in the silicone elastomer composition.

In one embodiment, a process for preparing a cured selective adhesion silicone rubber comprises;
1) forming a mixture of the selective adhesion liquid silicone rubber composition, and
2) curing the mixture at a temperature of from 80 to 140°C.

The selective adhesion liquid curable silicone rubber composition may readily be prepared in conventional mixing equipment. The order of mixing is not critical if the composition is to be used immediately.

The mixture of the selective adhesion liquid silicone rubber composition may be prepared by providing for at least 2 separate parts, such as part I and part II.

Part I may contain the catalyst (C) and any one of the organopolysiloxane (A), the silica filler (E), and the adhesion promoter (F), or any combination of the latter three.

Part II may contain the inhibitor (D) and the organopolysiloxane (B), and any one of the organopolysiloxane (A), the silica filler (E), and the adhesion promoter (F), or any combination of the latter three.

In some instances, the organopolysiloxane (A), the silica filler (E) and the adhesion promoter (F) are independently present in only one of part I or II, or in both.

In some instances, the catalyst (C) is present in a separate part from the organopolysiloxane (B) and the inhibitor (D).

The other additives may be in any of part I or II or in both parts. They may also be added after parts I and II have been combined.

The mixture may be prepared by providing for at least 3 parts, such as part I, part II and part III. Parts I and II may be provided as above. Part III may contain any of the organopolysiloxane (A), the organopolysiloxane (B), the catalyst (C), the inhibitor (D), the silica filler (E), the adhesion promoter (F). Further additives such as pigments, filler different from silica filler (E) may also be contained in any one or more of Parts I, II or III.

Subsequently the different parts are combined together and homogeneously mixed, with the optional subsequent step of the addition of any additional additive as may be required by the final use of the composition, to provide for the selective adhesion liquid silicone rubber composition.

The dynamic viscosity of the final composition may range of from 5 to 1000 Pa.s, alternatively of from 10 to 500 Pa.s, alternatively of from 50 to 250 Pa.s, as measured at 25°C, at a shear rate of 10 s⁻¹, using a plate-plate rheometer.

The homogeneous mixing of the components of the present composition may be proceeded to by using a suitable mixing means, such as a spatula, a drum roller, a mechanical stirrer, a three-roll mill, a sigma blade mixer, a bread dough mixer, and a two-roll mill.

The composition may be processed (or cured) by injection moulding, encapsulation moulding, press moulding, dispenser moulding, extrusion moulding, transfer moulding, press vulcanization, centrifugal casting, calendering, bead application or blow moulding.

The composition may alternatively be processed (or cured) using a 3D printing method. A typical method of forming a three-dimensional (3D) article may comprise multiple steps. For example, the method may comprise (i) printing a first heat-curable silicone composition with a 3D printer to form a layer. The method may further comprise (ii) heating the layer to form an at least partially cured layer. In addition, the method may comprise (iii) printing a second heat-curable silicone composition on the at least partially cured layer with the 3D printer to form a subsequent layer. The method may also comprise (iv) heating the subsequent layer to form an at least partially cured subsequent layer. Optionally, steps iii) and iv) may be repeated with independently selected curable silicone composition(s) for any additional layer(s) to form the 3D article. The first and second heat-curable silicone compositions may be the same as or different from one another.

The pot life at 25°C of the composition is > 12 hours, alternatively > 24 hours, alternatively > 36 hours, alternatively > 48 hours, alternatively > 72 hours.

Curing of the liquid curable silicone elastomer composition is carried out at a temperature of from 80 to 220°C. It is however in the interest of adhesion to heat sensitive substrates to carry out the curing at a temperature of from 80 to 140°C, alternatively of from 90 to 130°C, alternatively of from 100 to 120°C, alternatively of from 105 to 115°C.

The cure speed of the silicone elastomer composition is < 30 minutes, alternatively < 10 minutes, alternatively < 5 minutes, alternatively < 2 minutes, alternatively < 1 minute.

The progress of the cure reaction can be assessed at several occurrences. The cure monitoring parameters are derived from a movable die rheometer (MDR) experiment using ASTM D5289-92. T10 indicates when 10% of the cure is achieved. T90 indicates when 90% of the cure is achieved.

Curing can for example take place in a mold to form a moulded silicone article. The composition may for example be injection moulded to form an article, or the composition can be overmoulded by injection moulding around an article or over a substrate. When cured in presence of a heat sensitive substrate, the silicone elastomer composition of the present invention is cured under such conditions enabling development of strong adhesion with the heat sensitive substrate and the like, and more specifically, by using a temperature and curing time at which the heat sensitive substrate is not deformed, melted, or denatured.

The cured silicone elastomer obtained from the selective adhesion liquid curable silicone rubber composition typically has a hardness (durometer) < 75 Shore A, alternatively < 60 Shore A, alternatively < 50 Shore A.

The selective adhesion liquid silicone rubber composition of this invention may be applied to the surface of the substrate by any suitable means such as rolling, spreading, spraying, extruding, dispensing and the like, and cured as described above. After application of the composition onto the substrate, the selective adhesion liquid silicone rubber composition is cured at the cure temperature ranging of from 80 to 140°C, alternatively of from 90 to 130°C, alternatively of from 100 to 120°C, alternatively of from 105 to 115°C.

The cured silicone elastomer obtained from curing the selective adhesion liquid silicone rubber composition of the present invention may thus provide for composite parts where selective chemical bonding to a substrate occurs.

In one embodiment, the present invention relates to a composite part comprising a silicone elastomer cured from the selective adhesion liquid silicone rubber composition on a substrate.

The silicone elastomer cured from the selective adhesion liquid silicone rubber composition on a substrate, may be in the form of a surface layer.

The substrate having the silicone elastomer cured from the selective adhesion liquid silicone rubber composition may be rigid or flexible. Examples of substrates include plastic substrates, thermoplastic substrates, metal substrates, and textile substrates.

Examples of plastic substrates and thermoplastic substrates (also organic resin substrates) include acrylonitrile-butadiene-styrene, polyphenylene/styrene blends, polystyrenes, polycarbonate, polyurethane, styrene resin, polyethylene, polypropylene, acrylic, polyacrylamides, polyesters, polyethylene terephthalate, polybutylene terephthalate, polyphenylene oxide, polyphenylene sulfide, polysulfone, nylon, polyamide, polyimide, fluoropolymers, and liquid crystal resin, non-resin containing polyetherimides.

Examples of metal substrates include metal substrates selected from copper, alclad aluminum, anodized aluminum, galvanized steel, cold-rolled steel, cast aluminum, and cast magnesium.

Examples of textile substrates include natural or synthetic knit, woven or non-woven fabric made of materials such as cotton, polyamide, wool, nylon, polyester.

Such composite parts include those constructions where any of a plastic substrate or thermoplastic substrate and a silicone elastomer are used as an integral component. Exemplary of such composite parts include mobile phone, mobile telecommunications equipment, gaming machine, clocks, image receiver, DVD equipment, MD equipment, CD equipment, precision electronic equipment, electrical insulators, single-wire seals, microwave oven, refrigerator, electric rice cooker, cathode ray TV, thin displays of liquid crystal TV and plasma TV, various home appliance, copying machine, printer, facsimile machine, OA equipment, connector seal, spark plug cap, components of various sensors, automobile components, sports products, diving masks, diving gears, breathing masks, ventilator bellows, balloon catheters, rubber teats, thin-walled membranes, switch covers, medical products and devices, tubing and valves, pacifiers, feeding bottle nipple, and the like.

In one embodiment, the composite part with the selective adhesion liquid silicone rubber is selected from medical devices. In certain instances, it is required for the selective adhesion liquid silicone rubber to display biocompatibility, when used in devices which have skin contact or mucous contact, such as medical devices. The medical devices include masks, goggles, tubing and valves catheters, ostomy appliances, respiratory appliances, feeding appliances, contact lenses, hearing aids, orthotics, prosthesis, and the like.

When the liquid curable silicone elastomer composition is used for textile coating, such as airbag coating, the composition may be applied by any coating technique, including roller application, curtain coating, spray coating, knife coating or calendering.

When in the form of a layer, the thickness of the layer of cured silicone elastomer may range of from 0.01 to 20 mm, alternatively of from 0.1 to 10 mm, alternatively of from 0.1 to 6 mm.

In one embodiment, the present invention relates to the use of an adhesion promoter (F) selected from those silicone compounds bearing at least one reactive alkenyl group in conjunction with at least one of a reactive epoxy group or reactive acrylate group, to impart selective adhesion of a selective adhesion liquid silicone rubber composition as described above, when said composition is cured onto a substrate.

In a similar embodiment, the present invention relates to method for imparting selective adhesion of a liquid silicone rubber composition cured onto a substrate, such as a plastic substrate or a thermoplastic substrate, by providing for adhesion promoter (F) selected from those silicone compounds bearing at least one reactive alkenyl group in conjunction with at least one of a reactive epoxy group or reactive acrylate group.

In one embodiment, the present invention relates to the use of a selective adhesion liquid silicone rubber composition to form a composite part on a substrate, such as a plastic substrate or a thermoplastic substrate. The substrate may be a heat sensitive substrate, having a Vicat softening temperature < 140°C, as measured by ASTM D 1525-09.

In a similar embodiment, the present invention relates to a method for forming a composite part by curing the selective adhesion liquid silicone rubber composition described above onto a substrate, such as a plastic substrate or a thermoplastic substrate. The substrate may be a heat sensitive substrate, having a Vicat softening temperature < 140°C, as measured by ASTM D 1525-09.

The advantages of the present invention is that combining low temperature cure of from 80 to 140°C and curing in < 30 minutes, while ensuring adhesion simultaneously, allows the fabricator to use a wider variety of plastic or thermoplastic substrates, including those that might otherwise deform at temperatures > 140°C. The curing speed < 30 minutes further making injection moulding economically attractive. In some instances, the cured silicone elastomer displays biocompatibility.

In some instances, the composition is able to cure at a temperature of from 100 to 120°C in < 5 minutes, alternatively < 2 minutes.

Even though the cure reaction takes place in < 30 minutes or in < 5 minutes, the cured silicone elastomer obtained from the composition satisfies the typical properties of mechanical strength elongation at break, tear resistance, processability.

The present composition may be adapted to adhere to metal in instances where release from a mold is not a concern, taking advantage of the selective adhesion feature.

### EXAMPLES

### TESTS

### Cure monitoring

Cure was monitored on a Monsanto Model MDR 2000 Moving Die Rheometer using ASTM D5289-92. Approximately 5 g of material was placed between two sheets of 1 mil Dartek nylon (0.025 mm) and placed in the pre-heated rheometer. Time to 10% (t10), 50% (t50) and 90% (t90) cure were recorded as was the maximum displaced torque (S') at defined temperatures (see Tables).

Unless otherwise indicated, all viscosities are measured using a rotational viscometer such as a Brookfield viscometer, or by using a capillary rheometer, at 25°C.

### Evaluation of adhesion

Adhesion testing was performed using TritanTM Copolyester from Eastman (copolyester) or LexanTM EXL 1414 from Sabic (polycarbonate) as substrates. The LSR was evaluated by compression moulding the LSR in contact with a 1" x 4" x 0.125" copolyester plastic panel at ~ 100 °C for 10 minutes or the polycarbonate plastic panel for 120 °C for 10 minutes under 35 tons of pressure. The LSR was reinforced with a stainless steel mess to prevent elongation of the LSR during adhesion tests. Adhesion was measured a 180 ° peel measurement based on ASTM D 903-10. In testing adhesion to stainless steel, a shorter cycle time of 2 minutes was used, as this better reflects the moulding in an injection moulding machine.

Cohesive failure (% cf) is a percent approximation of the amount of LSR material which adheres to the area of substrate being tested. This is evaluated on the peel sample after it has been tested for adhesive strength.

The initial adhesion measurement (without post cure) is tested on the sample after it was initially cured via a press or oven. The post cured measurement is the adhesive force after the initial cured sample was placed in an oven for a set period of time and temperature. This measurement is useful to understand the robustness of the initial cure and/or the adhesion to the substrate.

### Evaluation of biocompatibility

A biocompatibility screen was run by placing a cured LSR specimen in direct contact with human embryonic cells. The Cytopathic Effect (CPE) is evaluated after a 24 h incubation period. The results of a test are examined microscopically for any alteration of cell morphology by comparing against both a positive and negative control. The material being tested is reported as either "Pass" (not producing a cytopathic effect) or "Fail" (producing a cytopathic effect).

### SA LSR mechanical properties

Tensile strength was determined using ASTM D412-06a. Elastomer was moulded into 2mm thick sheets, and then cut using ASTM Die C. Samples were pulled at 20 in/min. Tensile (MPa) and elongation at break (%) as well as 100% modulus (MPa) were recorded as the average of 2-3 samples.

Tear B: the elastomer was moulded into 2 mm thick sheets. The tear specimens were cut from the sheet using ASTM Die B. The specimens were pulled at 20 in./min (508 mm/min) and the tear strength was recorded as the pounds force divided by the thickness of the sample (kN/m).

Durometer of the LSR was measured on the Shore A scale using ASTM D 2240-05.

### MATERIALS

**Table 1**

| **Ingredient Name** | **Description** |
|---|---|
| Vinyl Polymer 1 - organopolysiloxane (A) | vinyl terminal polydimethylsiloxane having a viscosity of approximately 53,000 mPa.s |
| Vinyl Polymer 2 - organopolysiloxane (A) | vinyl terminal poly(dimethylsiloxane-co-methylvinylsiloxane) having a viscosity of 370 mPa.s and 1.16 wt.% vinyl. |
| SiH Polymer 1 - organopolysiloxane (B1) | HMe₂SiO_{0.5} capped MHQ resin having 0.97 wt. % H as SiH and a viscosity of 25 mPa.s. The resin also contains approximately 1 wt. % MeO as residual alkoxy functionality. |
| SiH Polymer 2 - organopolysiloxane (B2) | Me₃SiO_{0.5} terminal poly(dimethyl-co-methylhydrogen)siloxane having 0.69 wt. % H as SiH and a viscosity of 43.5 mPa.s |
| Pt catalyst solution 3.5% 1-Ethynyl-1-cyclohexanol in Vinyl Polymer 2 | A solution of Karstedt's catalyst (divinyltetramethyldisiloxane complex of platinum) in a vinyl terminal siloxane (0.52 wt. % Pt) |
| Masterbatch 1 | MB1 contains 70.8 parts of a dimethylvinylsiloxy terminated polydimethylsiloxane (A1) having a viscosity of about 55 Pa.s at 25°C, and 22.4 parts of a fumed silica filler (E) having a surface area of approximately 300m²/g. The silica is hydrophobized and contains no vinyl functionalization. |
| Masterbatch 2 | MB2 contains 63.3parts of a dimethylvinylsiloxy terminated polydimethylsiloxane (A1) having a viscosity of about 55 Pa.s at 25°C, and 29.6 parts of a fumed silica filler (E) having a surface area of approximately 300m²/g. The silica is hydrophobized and contains no vinyl functionalization. |
| Masterbatch 3 | MB3 contains 66.6 parts of a dimethylvinylsiloxy terminated polydimethylsiloxane (A1) having a viscosity of about 55 Pa.s at 25°C, and 25.8 parts of a fumed silica filler (E) having a surface area of approximately 300m²/g. The silica is hydrophobized and has a vinyl functionalization of approximately 0.178 mmol/g. |
| Adhesion Promoter 1 | Equilibration product of a OH terminal poly(dimethylsiloxane-co-methylvinylsiloxane) with glycidoxypropyltrimethoxysilane, the product having a viscosity of 15 mPa.s, a vinyl content of 5.9 wt. %, and an epoxide equivalent weight of 400 |

| ADDITIVES | |
|---|---|
| OH Terminal Polydimethylsiloxane 1 | (HOMe₂SiO_{0.5}) terminal PDMS with a viscosity of approximately 21 mPa.s was optionally added to the formulation. |
| Trimethylsilyl terminal Polydimethylsiloxane 1 | 100 mPa.s Me₃SiO_{0.5} terminal polydimethylsiloxane |
| Methylvinylcyclosiloxane | |
| 3-glycidoxyisopropyltrimethoxysilane | |
| OH Terminal polymethylvinylsiloxane | OH terminal polymethylvinylsiloxane, 40 mPa.s |
| OH terminal poly(dimethylsiloxane-co-methylvinylsiloxane) | OH terminal poly(dimethylsiloxane-co-methylvinylsiloxane) having approximately 12% vinyl, 15 mPa.s |
| Tetramethyldivinyldisilazane | |

### Examples 1 to 3 and Comparative example 1

Various compositions were prepared, containing varying amounts of organopolysiloxane (B1) as M^{H} crosslinker (SiH Polymer 1), and organopolysiloxane (B2) as D^{H} crosslinker (SiH Polymer 2), in organopolysiloxane (B), disclosed in Table 2.

Comparative example 1 has only organopolysiloxane (B2) as D^{H} crosslinker (SiH Polymer 2). The cure is approximately 189 sec at 110 °C. However, as the amount of M^{H} functional crosslinker is increased such as in Examples 1 to 4, cure time decreases. For the most part, it is possible to balance cure speed and pot life by using an appropriate amount of inhibitor and a mixture of M^{H} and D^{H} functional crosslinkers.

In Table 2, Example 2 having a 1:1 mole ratio mix of M^{H} and D^{H} functional crosslinkers exhibited a cure speed of 93 sec at 110 °C, yet had a pot life of ~ 72 hours. Furthermore, the use of the M^{H} functional crosslinker (SiH Polymer 1) had the benefit of increasing adhesion to the plastic substrate.

**Table 2**

| | **Comparative example 1** | **Example 1** | **Example 2** | **Example** 3 |
|---|---|---|---|---|
| | Mole % SiH from HMe₂SiO_{0.5} | | | |
| | 0 | 25 | 50 | 75 |
| **Part A (wt. %)** | | | | |
| Master Batch 1 | 90.91 | 90.91 | 90.91 | 90.9 |
| Vinyl Polymer 2 | 4.7 | 4.7 | 4.7 | 4.7 |
| Methylvinyl cyclosiloxanes | 0.07 | 0.07 | 0.07 | 0.07 |
| Adhes. Promoter 1 | 2 | 2 | 2 | 2 |
| Trimethylsilyl terminal Polydimethylsiloxane 1 | 1 | 1 | 1 | 1 |
| Pt Catalyst | 0.35 | 0.35 | 0.35 | 0.36 |
| Vinyl Terminal Polymer 1 | 0.97 | 0.97 | 0.97 | 0.97 |
| **Part B (wt. %)** | | | | |
| Master Batch 1 | 92.25 | 92.5 | 92.75 | 92.99 |
| Vinyl Polymer 2 | 2.52 | 2.52 | 2.52 | 2.52 |
| 1-Ethynyl-1-cyclohexanol | 0.091 | 0.091 | 0.091 | 0.091 |
| SiH Polymer 1 | 0 | 0.81 | 1.62 | 2.44 |
| SiH Polymer 2 | 4.7 | 3.52 | 2.35 | 1.17 |
| Vinyl Terminal Polymer 1 | 0.44 | 0.56 | 0.67 | 0.79 |

| | **Comparative example 1** | **Example 1** | **Example 2** | **Example** 3 |
|---|---|---|---|---|
| **Characteristics** | | | | |
| Pt Catalyst (ppm) | 9.1 | 9.1 | 9.1 | 9.36 |
| SiH/Vi (mol ratio) | 2.2 | 2.2 | 2.21 | 2.21 |
| **Properties** | | | | |
| Adhesion to Copolyester (N/25 mm) | | 47.16 | 59.55 | |
| Durometer Average | 36.8 | 37.2 | 37.4 | |
| Tear (kN/m) Average | 20.0 | 23.3 | 26.6 | |
| Tensile (MPa) Average | 7.36 | 7.36 | 7.99 | |
| Elongation (%) Average | 631 | 640 | 662 | |
| 100% Modulus (MPa) Average | 0.74 | 0.78 | 0.79 | |
| t90 (100°C) (seconds) | 437 | 279 | 180 | |
| t90 (110°C) (seconds) | 189 | 128 | 93 | 73 |
| t90 (120°C) (seconds) | 74 | 54 | 43 | |
| Pot Life at RT (hours) | >96 | >96 | >72, <96 | >24, <48 |

### Examples 4 and 5 and Comparative examples 2 and 3

Various compositions were prepared with varying amounts of adhesion promoter according to the invention, disclosed in Table 3.

Comparative examples 2 and 3 are free of adhesion promoter. Examples 4 and 5 contain 1 and 2 wt.% of adhesion promoter respectively, based on the total weight of the composition, which significantly increase adhesion to copolyester.

**Table 3**

| | **Comparative example 2** | **Comparative example 3** | **Example 4** | **Example 5** |
|---|---|---|---|---|
| **Part A** | Wt. % | Wt. % | Wt. % | Wt. % |
| Master Batch 1 | 90.91 | 83.58 | 90.91 | 90.91 |
| Vinyl Polymer 2 | 4.7 | 15 | 4.7 | 4.71 |
| Methylvinyl cyclosiloxanes | 0.07 | 0.07 | 0.07 | 0.07 |
| Adhes. Promoter 1 | 0 | 0 | 1.01 | 2.01 |
| Trimethylsilyl terminal Polydimethylsiloxane 1 | 1.01 | 1.02 | 1.01 | 1.01 |
| Pt Catalyst | 0.24 | 0.37 | 0.3 | 0.35 |
| Vinyl Terminal Polymer 1 | 3.08 | 0 | 2.03 | 0.97 |
| **Part B** | Wt. % | Wt. % | Wt. % | Wt. % |
| Master Batch 1 | 92.4 | 92.4 | 92.4 | 92.4 |
| Vinyl Polymer 2 | 2.52 | 2.51 | 2.52 | 2.51 |
| 1-Ethynyl-1-cyclohexanol | 0.091 | 0.091 | 0.091 | 0.091 |
| SiH Polymer 1 | 1.4 | 2 | 1.7 | 2 |
| SiH Polymer 2 | 2.11 | 3 | 2.55 | 3.01 |
| Vinyl Terminal Polymer 1 | 1.5 | 0 | 0.75 | 0 |

| | **Comparative example 2** | **Comparative example 3** | **Example 4** | **Example 5** |
|---|---|---|---|---|
| **Characteristics** | | | | |
| SiH/Vi | 2.82 | 2.79 | 2.78 | 2.78 |

| **Properties** | | | | |
|---|---|---|---|---|
| Adhesion to Copolyester (N/25 mm) | 49.00 | 49.94 | 86.78 | 101.26 |
| Post Cure Adhesion to Copolyester (N/25 mm) | 46.44 | 31.95 | 93.22 | 110.15 |
| Durometer Average | 28.2 | 32.0 | 31.3 | 33.6 |
| Tear (kN/m) Average | 16,5 | 21,2 | 14,7 | 15,1 |
| Tensile (MPa) Average | 7.55 | 6.81 | 7.91 | 8.02 |
| Elongation (%) Average | 730 | 557 | 732 | 735 |
| 100% Modulus (MPa) Average | 0.47 | 0.64 | 0.56 | 0.61 |
| t90 (100°C) (seconds) | 188 | 96 | 186 | 175 |
| t90 (110°C) (seconds) | 83 | 46 | 77 | 74 |
| t90 (120°C) (seconds) | 40 | 27 | 40 | 39 |
| t10 (100°C) (seconds) | 125 | 60 | 115 | 109 |

### Example 6 and Comparative example 4

Comparative example 4 is free of organopolysiloxane (B1) as M^{H} crosslinker (SiH Polymer 1), while Example 6 contains both the adhesion promoter according to the invention and the organopolysiloxane (B1) as M^{H} crosslinker (SiH Polymer 1), as disclosed in Table 4.

Example 6 displays a significant increase in adhesion despite the reaction cure speed t90 at 100°C to be significantly reduced. Surprisingly, a rapid cure of 133 seconds at 100°C allows for satisfying adhesion to plastic.

**Table 4**

| | **Example 6** | **Comparative example 4** |
|---|---|---|
| **Part A** | **Wt. %** | **Wt. %** |
| Master batch 1 | 45.94 | 45.94 |
| Master Batch 2 | 45.94 | 45.94 |
| Vinyl polymer 2 | 4.71 | 4.71 |
| Methylvinyl cyclics | 0.07 | 0.07 |
| Adhesion promoter 1 | 2 | 2.02 |
| Trimethylsilyl terminal Polydimethylsiloxane 1 | 1 | 1 |
| Pt catalyst | 0.34 | 0.35 |

| **Part B** | | |
|---|---|---|
| Master batch 1 | 46.2 | 45.75 |
| Master Batch 2 | 46.2 | 45.75 |
| Vinyl Polymer 2 | 2.53 | 2.51 |
| 1-Ethynyl-1-cyclohexanol | 0.092 | 0.091 |
| SiH Polymer 1 | 1.99 | 0 |
| SiH Polymer 2 | 2.99 | 5.91 |

| **Characteristics** | | |
|---|---|---|
| SiH/Vi | 2.80 | 2.80 |

| **Properties** | | |
|---|---|---|
| Adhesion to Copolyester (N/25 mm) | **105.62 (~15% cf)** | **47.78 (0% cf)** |
| Post Cure Adhesion to Copolyester (N/25 mm) | **108.17 (~10% cf)** | **47.11 (0% cf)** |
| Durometer Average | 43.3 | 40.1 |
| Tear (kN/m) Average | 38.2 | 33.5 |
| Tensile (MPa) Average | 9.29 | 8.67 |
| Elongation (%) Average | 726 | 716 |
| 100% Modulus (MPa) Average | 1.02 | 0.92 |
| t90 (100°C) (seconds) | **133** | **272** |
| t90 (110°C) (seconds) | 67 | 115 |
| t90 (120°C) (seconds) | 33 | - |
| t10 (100°C) (seconds) | 80 | 172 |
| t10 (110°C) (seconds) | 36 | 68 |
| t10 (120°C) (seconds) | 20 | -- |

### Examples 7 to 10

Examples 7 to 10 further illustrate the invention where organopolysiloxane (B1), an M^{H} functional crosslinker (SiH Polymer 1), and the adhesion promoter according to the invention provide for tunable adhesion to copolyester and to stainless steel in presence of varying amount of OH Terminal Polydimethylsiloxane 1, as disclosed in Table 5.

**Table 5**

| | **Example 7** | **Example 8** | **Example 9** | **Example 10** |
|---|---|---|---|---|
| **Part A (Wt. %)** | | | | |
| Master batch 1 | 45.94 | 45.44 | 45.44 | 45.44 |
| Master Batch 2 | 45.94 | 45.44 | 45.44 | 45.44 |
| Vinyl polymer 2 | 4.7 | 4.71 | 4.71 | 4.69 |
| Methylvinyl cyclics | 0.07 | 0.07 | 0.07 | 0.07 |
| Adhesion promoter 1 | 2 | 2.01 | 2 | 2 |
| Trimethylsilyl terminal Polydimethylsiloxane 1 | 1 | 1 | 1 | 1 |
| Pt catalyst | 0.35 | 0.35 | 0.35 | 0.36 |
| OH Terminal Polydimethylsiloxane 1 | 0 | 0.25 | 0.5 | 1 |
| Vinyl Terminal polymer 1 | 0 | 0.75 | 0.5 | 0 |

| **Part B (Wt. %)** | | | | |
|---|---|---|---|---|
| Master batch 1 | 46.2 | 46.2 | 46.2 | 46.2 |
| Master Batch 2 | 46.2 | 46.2 | 46.2 | 46.2 |
| Vinyl polymer 2 | 2.6 | 2.6 | 2.6 | 2.6 |
| Ethynyl cyclohexanol | 0.026 | 0.026 | 0.026 | 0.026 |
| SiH Polymer 1 | 1.99 | 1.99 | 1.99 | 1.99 |
| SiH Polymer 2 | 3 | 3 | 3 | 3 |
| **Characteristics** | | | | |
| ppm Pt Catalyst | 9.18 | 9.1 | 9.1 | 9.36 |
| SiH/Vi | 2.8 | 2.8 | 2.8 | 2.8 |

| **Properties** | | | | |
|---|---|---|---|---|
| Adhesion to Copolyester (N/25 mm) | 101.89 (~10% cf) | 94.43 (~8.5% cf) | 96.2 (~25% cf) | 143.91 (~80 cf) |
| Adhesion to Stainless Steel (N/25 mm) | 4.93 | >38 | >44 | >45 |

### Example 11

Example 11 further illustrates the invention providing for tunable adhesion to copolyester and polycarbonate and release from stainless steel (low adhesion with 0% cohesive failure), as disclosed in Table 6.

**Table 6**

| | **Example 11** |
|---|---|
| **Part A** | Wt. % |
| Masterbatch1 | 46.22 |
| Masterbatch2 | 46.22 |
| Vinyl Polymer 2 | 4.7 |
| Methylvinylcyclosiloxanes | 0.07 |
| Trimethylsilyl terminal Polydimethylsiloxane 1 | 1.51 |
| Platinum Catalyst | 0.29 |
| OH Terminal Polydimethylsiloxane 1 | 1 |

| **Part B** | Wt. % |
|---|---|
| Masterbatch1 | 45.11 |
| Masterbatch2 | 45.11 |
| Vinyl Polymer 2 | 2.51 |
| 1-Ethynyl-1-cyclohexanol | 0.091 |
| SiH Polymer 1 | 2.07 |
| SiH Polymer 2 | 3.12 |
| Adhesion Promoter 1 | 1 |
| OH Terminal Polydimethylsiloxane 1 | 1 |

| **Characteristics** | |
|---|---|
| Pt Catalyst (ppm) | 7.54 |
| SiH/Vi | 3.49 |

| **Properties** | |
|---|---|
| Adhesion to Copolyester (N/25 mm) | 164.58 (~95% cf) |
| Post Cure Adhesion to Copolyester (N/25 mm) | 153.17 (~90% cf) |
| Adhesion to PolyCarbonate (N/25mm) | 138.4 (~62% cf) |
| Post Cure Adhesion to Polycarbonate (N/25mm) | 134.8 (~92% cf) |
| Adhesion to Stainless Steel (N/25 mm) | 8.89 (~0% cf) |
| t90 (100°C) (seconds) | 112.16 |
| t90 (110°C) (seconds) | 46.28 |
| t90 (120°C) (seconds) | 28.82 |
| t10 (100°C) (seconds) | 70.77 |
| t10 (110°C) (seconds) | 31.59 |
| t10 (120°C) (seconds) | 18.21 |

### Example 12 and Comparative example 5

Comparative example 5 features an adhesion promoter composed of a non-reacted mixture of OH terminal vinyl functional siloxane and epoxy functional silane, which is failing the biocompatibility test as described above.

Example 12, featuring the Adhesion Promoter 1 according to the present invention, shows biocompatibility (pass).

**Table 7**

| | **Comparative example 5** | **Example 12** |
|---|---|---|
| **Part A (wt. %)** | | |
| Masterbatch 3 | 12.84 | 0 |
| Masterbatch 1 | 71.53 | 90.91 |
| Vinyl Polymer 2 | 4.47 | 4.7 |
| Methylvinyl cyclosiloxanes | 0.07 | 0.07 |
| Adhesion Promoter 1 | 0 | 2.02 |
| OH terminal polymethylvinylsiloxane | 1 | 0 |
| (3-glycidoxy-propyl)trimethoxysilane | 1.01 | 0 |
| Trimethylsilyl terminal Polydimethylsiloxane 1 | 1 | 1 |
| Pt Catalyst | 0.55 | 0.36 |
| Vinyl Terminal Polymer 1 | 7.55 | 0.97 |

| **Part B (wt. %)** | | |
|---|---|---|
| Masterbatch 3 | 11.52 | 0 |
| Masterbatch 1 | 72.82 | 93.27 |
| Vinyl polymer 2 | 2.38 | 2.51 |
| 1-Ethynyl-1-cyclohexanol | 0.086 | 0.091 |
| SiH Polymer 1 | 0 | 3.22 |
| SiH Polymer 2 | 7.43 | 0 |
| Vinyl Terminal Polymer 1 | 5.77 | 0.91 |
| **Tissue Culture** | Fail | Pass |

## Claims

1. A selective adhesion liquid silicone rubber composition for building unprimed adhesion to a first type of substrate while exhibiting minimal adhesion to a second type of substrate comprising
• an organopolysiloxane (A) containing at least 2 alkenyl groups bonded to silicon atom per molecule,
• an organopolysiloxane (B) containing at least 2 silicon-bonded hydrogen atom per molecule comprising organopolysiloxane (B1) and organopolysiloxane (B2),
wherein
∘ organopolysiloxane (B1) contains siloxy units of the type (R₂HSiO_{1/2})ₓ where R is independently selected from hydrogen, aliphatic hydrocarbyl, aromatic hydrocarbyl, or organyl group and x ≥ 2; and
∘ organopolysiloxane (B2) contains siloxy units of the type (RHSiO_{2/2})_{z} where R is independently selected from hydrogen, aliphatic hydrocarbyl, aromatic hydrocarbyl, or organyl group and z ≥ 2,
• a platinum based catalyst (C),
• an inhibitor (D), selected from the group consisting of acetylenic alcohols and their derivatives,
• a silica filler (E)
• an adhesion promoter (F);
wherein organopolysiloxane (B1) is a branched polymer conforming to the general formula (II)
(R₂HSiO_{1/2})ₓ (R₃SiO_{1/2})_{y} (RHSiO_{2/2})_{z} (R₂SiO_{2/2})ₚ (RSiO_{3/2})_{q} (HSiO_{3/2})ᵥ (SiO_{4/2})ᵣ (II)
where R is independently selected from hydrogen, aliphatic hydrocarbyl, aromatic hydrocarbyl, or organyl group, and H is hydrogen and
where x ≥ 2, y ≥ 0, z ≥ 0, p ≥ 0, v ≥ 0, and at least one of q or r ≥ 1;
where the adhesion promoter (F) is selected from those silicone compounds bearing at least one reactive alkenyl group in conjunction with at least one of a reactive epoxy group or reactive acrylate group.

2. The selective adhesion liquid silicone rubber composition of claim 1 where organopolysiloxane (B1) include compounds of formula (R'₂HSiO_{1/2})ₓ(SiO_{4/2})ᵣ, where R' is a methyl group, and the ratio x:r ranges of from 0.2:1 to 4:1.

3. The selective adhesion liquid silicone rubber composition of any of previous claims where organopolysiloxane (B2) is described by formula (III)
(R₂HSiO_{1/2})ₓ (R₃SiO_{1/2})_{y} (RHSiO_{2/2})_{z} (R₂SiO_{2/2})ₚ (III)
where x ≥ 0, y > 0, z ≥ 2, p ≥ 0.

4. The selective adhesion liquid silicone rubber composition of any of previous claims where the inhibitor is selected from 1-ethynyl-1-cyclohexanol, 2-methyl-3-butyn-2-ol, 3-butyn-1-ol, 3-butyn-2-ol, propargylalcohol, 2-phenyl-2-propyn-1-ol, 3,5-dimethyl-1-hexyn-3-ol, 1-ethynylcyclopentanol, 3-methyl-1-penten-4-yn-3-ol, and mixtures thereof.

5. The selective adhesion liquid silicone rubber composition of any of previous claims where the adhesion promoter (F)
is the reaction product of an hydroxyl-functional siloxane bearing either one of a reactive alkenyl group, a reactive epoxy or acrylate group with a silane or siloxane bearing either one of a reactive alkenyl group, a reactive epoxy or a reactive acrylate group, provided the resulting adhesion promoter bears at least one reactive alkenyl group in conjunction with at least one of a reactive epoxy group or reactive acrylate group; or .
is the reaction product of an hydroxyl-functional siloxane bearing at least one reactive alkenyl group with a silane or siloxane bearing either one of a reactive epoxy or a reactive acrylate group.

6. The selective adhesion liquid silicone rubber composition of any of previous claims where the adhesion promoter (F) include the compounds of formula (IV)
[(R¹O)₂R²SiO_{1/2}]_{w}[(R¹O)R²SiO]ᵤ (R²SiO_{3/2})ₛ(R³₂SiO)ₜ(MeViSiO)ᵥ (IV)
where R¹ may be alkyl, hydrogen, or indicate attachment to other siloxane groups; R² is an aliphatic group bearing an epoxy moiety; R³ is alkyl; Me is methyl and Vi is an alkenyl group, such as a vinyl group, and where w ≥ 0, u ≥ 0, s ≥ 0, t ≥ 0 and v > 0 provided that w + s ≥ 1.

7. A process for preparing a cured selective adhesion silicone rubber having unprimed adhesion to a first type of substrate while exhibiting minimal adhesion to a second type of substrate comprising
1) forming a mixture of the selective adhesion liquid silicone rubber composition according to any one of claims 1 to 6, and
2) curing the mixture at a temperature of from 80 to 140°C.

8. The process of claim 7 where the mixture of the selective adhesion liquid silicone rubber composition is provided by at least 2 separate parts.

9. A composite part comprising a silicone elastomer cured from the selective adhesion liquid silicone rubber composition according to any one of claims 1 to 6 on a substrate.

10. The composite part of claim 9 where the substrate includes plastic substrates, thermoplastic substrates, metal substrates, and textile substrates.

11. The composite part of claim 9 or 10 where a plastic substrate or thermoplastic substrate and a silicone elastomer are used as an integral component.

12. The composite part of any of claims 9 to 11 selected from mobile phone, mobile telecommunications equipment, gaming machine, clocks, image receiver, DVD equipment, MD equipment, CD equipment, precision electronic equipment, electrical insulators, single-wire seals, microwave oven, refrigerator, electric rice cooker, cathode ray TV, thin displays of liquid crystal TV and plasma TV, various home appliance, copying machine, printer, facsimile machine, OA equipment, connector seal, spark plug cap, components of various sensors, automobile components, sports products, diving masks, diving gears, breathing masks, ventilator bellows, balloon catheters, rubber teats, thin-walled membranes, switch covers, medical products and devices, tubing and valves, pacifiers, feeding bottle nipple.

13. Use of a selective adhesion liquid silicone rubber composition according to any one of claims 1 to 6 to form a composite part on a substrate.

14. A method for forming a composite part by curing the selective adhesion liquid silicone rubber composition according to any one of claims 1 to 6 onto a substrate.

15. The method according to claim 14 where the substrate may be a heat sensitive substrate, having a Vicat softening temperature < 140°C, as measured by ASTM D 1525-09.

16. A method of forming a three-dimensional (3D) article, said method comprising:
i. printing a first heat-curable silicone composition with a 3D printer to form a layer;
ii. heating the layer to form an at least partially cured layer;
iii. printing a second heat-curable silicone composition on the at least partially cured layer with the 3D printer to form a subsequent layer;
iv. heating the subsequent layer to form an at least partially cured subsequent layer; and,
v. optionally, repeating steps iii) and iv) with independently selected heat-curable silicone composition(s) for any additional layer(s) to form the 3D article;
wherein the first and second heat-curable silicone compositions are the same as or different from one another, and wherein at least one of the first and second heat-curable silicone compositions is the selective adhesion liquid silicone rubber composition as claimed in claims 1-6.

## Patentansprüche

1. Flüssige Silikonkautschukzusammensetzung mit selektiver Haftung zum Aufbau einer grundierungsfreien Haftung an einem ersten Substrattyp bei gleichzeitig minimaler Haftung an einem zweiten Substrattyp, umfassend
• ein Organopolysiloxan (A), das mindestens 2 an Siliciumatom gebundene Alkenylgruppen pro Molekül enthält,
• ein Organopolysiloxan (B), das mindestens 2 siliciumgebundene Wasserstoffatome pro Molekül enthält, umfassend Organopolysiloxan (B1) und Organopolysiloxan (B2), wobei
o Organopolysiloxan (B1) Siloxyeinheiten des Typs (R₂HSiO_{1/2})ₓ enthält, wobei R unabhängig voneinander ausgewählt ist aus Wasserstoff, aliphatischem Kohlenwasserstoff, aromatischem Kohlenwasserstoff oder Organylgruppe und x ≥ 2; und
o Organopolysiloxan (B2) Siloxyeinheiten des Typs (RHSiO_{2/2})_{z} enthält, wobei R unabhängig voneinander ausgewählt ist aus Wasserstoff, aliphatischem Kohlenwasserstoff, aromatischem Kohlenwasserstoff oder Organylgruppe und z ≥ 2,
• einen platinbasierten Katalysator (C),
• einen Inhibitor (D), ausgewählt aus der Gruppe bestehend aus acetylenischen Alkoholen und deren Derivaten,
• einen Siliciumdioxid-Füllstoff (E)
• einen Haftvermittler (F);
wobei Organopolysiloxan (B1) ein verzweigtes Polymer ist, das der allgemeinen Formel (II) entspricht
(R₂HSiO_{1/2})ₓ (R₃SiO_{1/2})_{y} (RHSiO_{2/2})_{z} (R₂SiO_{2/2})ₚ (RSiO_{3/2})_{q} (HSiO_{3/2})ᵥ (SiO_{4/2})ᵣ (II)
wobei R unabhängig aus Wasserstoff, aliphatischem Kohlenwasserstoff, aromatischem Kohlenwasserstoff oder Organylgruppe ausgewählt ist und H Wasserstoff ist und
wobei x ≥ 2, y ≥ 0, z ≥ 0, p ≥ 0, v ≥ 0, und mindestens eines von q oder r ≥ 1;
wobei der Haftvermittler (F) ausgewählt ist aus denjenigen Silikonverbindungen, die mindestens eine reaktive Alkenylgruppe in Verbindung mit mindestens einer reaktiven Epoxygruppe oder reaktiven Acrylatgruppe tragen.

2. Flüssige Silikonkautschukzusammensetzung mit selektiver Haftung nach Anspruch 1, wobei Organopolysiloxan (B1) Verbindungen der Formel (R'₂HSiO_{1/2})ₓ(SiO_{4/2})ᵣ einschließt, wobei R' eine Methylgruppe ist und das Verhältnis x:r von 0,2:1 bis 4:1 reicht.

3. Flüssige Silikonkautschukzusammensetzung mit selektiver Haftung nach einem der vorstehenden Ansprüche, wobei das Organopolysiloxan (B2) durch Formel (III) beschrieben wird
(R₂HSiO_{1/2})ₓ (R₃SiO_{1/2})_{y} (RHSiO_{2/2})_{z} (R₂SiO_{2/2})ₚ (III)
wobei x ≥ 0, y ≥ 0, z ≥ 2, p ≥ 0.

4. Flüssige Silikonkautschukzusammensetzung mit selektiver Haftung nach einem der vorstehenden Ansprüche, wobei der Inhibitor ausgewählt ist aus 1-Ethinyl-1-cyclohexanol, 2-Methyl-3-butin-2-ol, 3-Butin-1-ol, 3-Butin-2-ol, Propargylalkohol, 2-Phenyl-2-propin-1-ol, 3,5-Dimethyl-1-hexin-3-ol, 1-Ethinylcyclopentanol, 3-Methyl-1-penten-4-in-3-ol und Mischungen davon.

5. Flüssige Silikonkautschukzusammensetzung mit selektiver Haftung nach einem der vorstehenden Ansprüche, wobei der Haftvermittler (F)
das Reaktionsprodukt eines hydroxylfunktionellen Siloxans, das entweder eine reaktive Alkenylgruppe, eine reaktive Epoxy- oder Acrylatgruppe trägt, mit einem Silan oder Siloxan, das entweder eine reaktive Alkenylgruppe, eine reaktive Epoxy- oder eine reaktive Acrylatgruppe trägt, ist, mit der Maßgabe, dass der resultierende Haftvermittler mindestens eine reaktive Alkenylgruppe in Verbindung mit mindestens einer reaktiven Epoxygruppe oder reaktiven Acrylatgruppe trägt; oder
das Reaktionsprodukt eines hydroxyfunktionellen Siloxans ist, das mindestens eine reaktive Alkenylgruppe trägt, mit einem Silan oder Siloxan, das entweder eine reaktive Epoxygruppe oder eine reaktive Acrylatgruppe trägt.

6. Flüssige Silikonkautschukzusammensetzung mit selektiver Haftung nach einem der vorstehenden Ansprüche, wobei der Haftvermittler (F) die Verbindungen der Formel (IV) einschließt
[(R¹O)₂R²SiO_{1/2}]_{w}[(R¹O)R²SiO]ᵤ (R²SiO_{3/2})ₛ(R³₂SiO)ₜ(MeViSiO)ᵥ (IV)
wobei R¹ Alkyl, Wasserstoff sein kann oder die Bindung an andere Siloxangruppen anzeigt; R² eine aliphatische Gruppe ist, die einen Epoxyrest trägt; R³ Alkyl ist; Me Methyl ist und Vi eine Alkenylgruppe ist, wie eine Vinylgruppe, und wobei w ≥ 0, u ≥ 0, s ≥ 0, t ≥ 0 und v ≥ 0 mit der Maßgabe, dass w + s ≥ 1.

7. Verfahren zum Herstellen eines gehärteten Silikonkautschuks mit selektiver Haftung, der eine grundierungsfreie Haftung an einem ersten Substrattyp bei gleichzeitig minimaler Haftung an einem zweiten Substrattyp aufweist, umfassend
1) Bilden einer Mischung der flüssigen Silikonkautschukzusammensetzung mit selektiver Haftung nach einem der Ansprüche 1 bis 6 und
2) Härten der Mischung bei einer Temperatur von 80 bis 140 °C.

8. Verfahren nach Anspruch 7, wobei die Mischung der flüssigen Silikonkautschukzusammensetzung mit selektiver Haftung durch mindestens 2 separate Teile bereitgestellt wird.

9. Verbundteil, umfassend ein Silikonelastomer, das aus der flüssigen Silikonkautschukzusammensetzung mit selektiver Haftung nach einem der Ansprüche 1 bis 6 gehärtet ist, auf einem Substrat.

10. Verbundteil nach Anspruch 9, wobei das Substrat Kunststoffsubstrate, thermoplastische Substrate, Metallsubstrate und Textilsubstrate einschließt.

11. Verbundteil nach Anspruch 9 oder 10, wobei ein Kunststoffsubstrat oder thermoplastisches Substrat und ein Silikonelastomer als integraler Bestandteil verwendet werden.

12. Verbundteil nach einem der Ansprüche 9 bis 11, ausgewählt aus Mobiltelefon, mobilen Telekommunikationsgeräten, Spielautomaten, Uhren, Bildempfängern, DVD-Geräten, MD-Geräten, CD-Geräten, Präzisionselektronikgeräten, elektrischen Isolatoren, Einzeldrahtdichtungen, Mikrowellenofen, Kühlschrank, elektrischem Reisherd, Kathodenstrahl-TV, dünnen Displays von Flüssigkristall-TV und Plasma-TV, verschiedenen Haushaltsgeräten, Kopiergerät, Drucker, Faxgerät, OA-Geräten, Verbinderdichtungen, Zündkerzenkappen, Komponenten verschiedener Sensoren, Automobilkomponenten, Sportprodukten, Tauchmasken, Tauchausrüstungen, Atemmasken, Beatmungsgerätebälgen, Ballonkathetern, Gummisaugern, dünnwandigen Membranen, Schalterabdeckungen, medizinischen Produkten und Geräten, Schläuchen und Ventilen, Schnullern, Flaschensaugern.

13. Verwendung einer flüssigen Silikonkautschukzusammensetzung mit selektiver Haftung nach einem der Ansprüche 1 bis 6 zum Ausbilden eines Verbundteils auf einem Substrat.

14. Verfahren zum Ausbilden eines Verbundteils durch Aushärten der flüssigen Silikonkautschukzusammensetzung mit selektiver Haftung nach einem der Ansprüche 1 bis 6 auf einem Substrat.

15. Verfahren nach Anspruch 14, wobei das Substrat ein wärmeempfindliches Substrat sein kann, das eine Vicat-Erweichungstemperatur < 140 °C aufweist, gemessen nach ASTM D 1525-09.

16. Verfahren zum Ausbilden eines dreidimensionalen Artikels (3D-Artikels), das Verfahren umfassend:
i. Drucken einer ersten wärmehärtbaren Silikonzusammensetzung mit einem 3D-Drucker, um eine Schicht zu bilden;
ii. Erwärmen der Schicht, um eine mindestens teilweise gehärtete Schicht zu bilden;
iii. Drucken einer zweiten wärmehärtbaren Silikonzusammensetzung auf die mindestens teilweise gehärtete Schicht mit dem 3D-Drucker, um eine Folgeschicht zu bilden;
iv. Erwärmen der Folgeschicht, um eine mindestens teilweise gehärtete Folgeschicht zu bilden; und
v. optional Wiederholen von Schritten iii) und iv) mit unabhängig ausgewählter wärmehärtbarer/ausgewählten wärmehärtbaren Silikonzusammensetzung(en) für (eine) beliebige zusätzliche Schicht(en), um den 3D-Artikel zu bilden;
wobei die erste und die zweite wärmehärtbare Silikonzusammensetzung gleich oder unterschiedlich voneinander sind und wobei mindestens eine der ersten und der zweiten wärmehärtbaren Silikonzusammensetzung die flüssige Silikonkautschukzusammensetzung mit selektiver Haftung nach einem der Ansprüche 1 bis 6 ist.

## Revendications

1. Composition liquide de caoutchouc de silicone à adhérence sélective permettant de construire une adhérence non apprêtée à un premier type de substrat tout en présentant une adhérence minimale à un second type de substrat, comprenant
• un organopolysiloxane (A) contenant au moins 2 groupes alcényle liés à un atome de silicium par molécule,
• un organopolysiloxane (B) contenant au moins 2 atomes d'hydrogène liés à du silicium par molécule comprenant un organopolysiloxane (B1) et un organopolysiloxane (B2), dans laquelle
∘ l'organopolysiloxane (B1) contient des motifs siloxy du type (R₂HSiO_{1/2})ₓ, où R est choisi indépendamment parmi hydrogène, hydrocarbyle aliphatique, hydrocarbyle aromatique, ou groupe organyle et x ≥ 2 ; et
∘ l'organopolysiloxane (B2) contient des motifs siloxy du type (RHSiO_{2/2})_{z} où R est choisi indépendamment parmi hydrogène, hydrocarbyle aliphatique, hydrocarbyle aromatique ou groupe organyle et z ≥ 2,
• un catalyseur à base de platine (C),
• un inhibiteur (D), choisi dans le groupe constitué d'alcools acétyléniques et leurs dérivés,
• une charge de silice (E)
• un promoteur d'adhérence (F) ;
dans laquelle l'organopolysiloxane (B1) est un polymère ramifié conforme à la formule générale (II)
(R₂HSiO_{1/2})ₓ(R₃SiO_{1/2})_{y}(RHSiO_{2/2})_{z}(R₂SiO_{2/2})ₚ(RSiO_{3/2})_{q}(HSiO_{3/2})ᵥ(SiO_{4/2})ᵣ (II)
où R est choisi indépendamment parmi hydrogène, hydrocarbyle aliphatique, hydrocarbyle aromatique, ou groupe organyle, et H est hydrogène et
où x ≥ 2, y ≥ 0, z ≥ 0, p ≥ 0, v ≥ 0, et au moins l'un parmi q ou r ≥ 1 ;
où le promoteur d'adhérence (F) est choisi parmi les composés de silicone portant au moins un groupe alcényle réactif conjointement avec au moins l'un parmi un groupe époxy réactif ou un groupe acrylate réactif.

2. Composition liquide de caoutchouc de silicone à adhérence sélective selon la revendication 1, où l'organopolysiloxane (B1) comporte des composés de formule (R'₂HSiO_{1/2})ₓ(SiO_{4/2})ᵣ, où R' est un groupe méthyle, et le rapport x:r va de 0,2:1 à 4:1.

3. Composition liquide de caoutchouc de silicone à adhérence sélective selon l'une quelconque revendication précédente, où l'organopolysiloxane (B2) est décrit par la formule (III)
(R₂HSiO_{1/2})ₓ(R₃SiO_{1/2})_{y}(RHSiO_{2/2})_{z}(R₂SiO_{2/2})ₚ (III)
où x ≥ 0, y ≥ 0, z ≥ 2, p ≥ 0.

4. Composition liquide de caoutchouc de silicone à adhérence sélective selon l'une quelconque des revendications précédentes, où l'inhibiteur est choisi parmi 1-éthynyl-1-cyclohexanol, 2-méthyl-3-butyn-2-ol, 3-butyn-1-ol, 3-butyn-2-ol, alcool propargylique, 2-phényl-2-propyn-1-ol, 3,5-diméthyl-1-hexyn-3-ol, 1-éthynylcyclopentanol, 3-méthyl-1-pentén-4-yn-3-ol, et mélanges de ceux-ci.

5. Composition liquide de caoutchouc de silicone à adhérence sélective selon l'une quelconque des revendications précédentes, où le promoteur d'adhérence (F)
est le produit de réaction d'un siloxane à fonctionnalité hydroxyle portant l'un parmi un groupe alcényle réactif, un groupe époxy ou acrylate réactif avec un groupe silane ou siloxane portant l'un parmi un groupe alcényle réactif, un groupe époxy réactif ou acrylate réactif, à condition que le promoteur d'adhérence résultant porte au moins un groupe alcényle réactif conjointement avec au moins l'un parmi un groupe époxy réactif ou un groupe acrylate réactif ; ou .
est le produit de réaction d'un siloxane à fonctionnalité hydroxyle portant au moins un groupe alcényle réactif avec un silane ou un siloxane portant l'un parmi un groupe époxy réactif ou un groupe acrylate réactif.

6. Composition liquide de caoutchouc de silicone à adhérence sélective selon l'une quelconque des revendications précédentes, où le promoteur d'adhérence (F) comporte les composés de formule (IV),
[(R¹O)₂R²SiO_{1/2}]_{w}[(R¹O)R²SiO]ᵤ(R²SiO_{3/2})ₛ(R³₂SiO)ₜ(MeViSiO)ᵥ (IV)
où R¹ peut être alkyle, hydrogène, ou indiquer une fixation à d'autres groupes siloxane ; R² est un groupe aliphatique portant un fragment époxy ; R³ est alkyle ; Me est méthyle et Vi est un groupe alcényle, tel qu'un groupe vinyle, et où w ≥ 0, u ≥ 0, s ≥ 0, t ≥ 0 et v ≥ 0, à condition que w + s ≥ 1.

7. Procédé de préparation d'un caoutchouc de silicone à adhérence sélective durci ayant une adhérence non apprêtée à un premier type de substrat tout en présentant une adhérence minimale à un second type de substrat, comprenant
1) la formation d'un mélange de la composition liquide de caoutchouc de silicone à adhérence sélective selon l'une quelconque des revendications 1 à 6, et
2) le durcissement du mélange à une température allant de 80 à 140 °C.

8. Procédé selon la revendication 7, où le mélange de la composition liquide de caoutchouc de silicone à adhérence sélective est fourni par au moins 2 parties distinctes.

9. Pièce composite comprenant un élastomère de silicone durci à partir de la composition liquide de caoutchouc de silicone à adhérence sélective selon l'une quelconque des revendications 1 à 6 sur un substrat.

10. Pièce composite selon la revendication 9, où le substrat comporte des substrats plastiques, des substrats thermoplastiques, des substrats métalliques, et des substrats textiles.

11. Pièce composite selon la revendication 9 ou 10, où un substrat plastique ou un substrat thermoplastique et un élastomère de silicone sont utilisés en tant que composant d'un seul tenant.

12. Pièce composite selon l'une quelconque des revendications 9 à 11, choisie parmi téléphone mobile, équipement de télécommunications mobile, machine de jeu, horloges, récepteur d'image, équipement DVD, équipement MD, équipement CD, équipement électronique de précision, isolateurs électriques, joints unifilaires, four à micro-ondes, réfrigérateur, cuiseur à riz électrique, téléviseur cathodique, écrans minces de téléviseur à cristaux liquides et téléviseur à plasma, divers appareils ménagers, copieur, imprimante, télécopieur, équipement bureautique, joint de connecteur, capuchon de bougie, composants de divers capteurs, composants automobiles, produits sportifs, masques de plongée, équipements de plongée, masques respiratoires, soufflets de ventilateur, cathéters à ballonnet, tétines en caoutchouc, membranes à paroi mince, couvercles d'interrupteurs, produits et dispositifs médicaux, tubes et valves, sucettes, tétines de biberons.

13. Utilisation d'une composition liquide de caoutchouc de silicone à adhérence sélective selon l'une quelconque des revendications 1 à 6 pour former une pièce composite sur un substrat.

14. Procédé permettant de former une pièce composite par durcissement de la composition liquide de caoutchouc de silicone à adhérence sélective selon l'une quelconque des revendications 1 à 6 sur un substrat.

15. Procédé selon la revendication 14, où le substrat peut être un substrat thermosensible, ayant une température de ramollissement Vicat < 140 °C, telle que mesurée selon la norme ASTM 0 1525-09.

16. Procédé de formation d'un article tridimensionnel (3D), ledit procédé comprenant :
i. l'impression d'une première composition de silicone thermodurcissable avec une imprimante 3D pour former une couche ;
ii. le chauffage de la couche pour former une couche au moins partiellement durcie ;
iii. l'impression d'une seconde composition de silicone thermodurcissable sur la couche au moins partiellement durcie avec l'imprimante 3D pour former une couche suivante ;
iv. le chauffage de la couche suivante pour former une couche suivante au moins partiellement durcie ; et,
v. facultativement, la répétition des étapes iii) et iv) avec une ou des compositions de silicone thermodurcissable choisies indépendamment pour toute(s) couche(s) supplémentaire(s) pour former l'article 3D ;
dans lequel les première et seconde compositions de silicone thermodurcissables sont identiques ou différentes l'une de l'autre, et dans lequel au moins l'une des première et seconde compositions de silicone thermodurcissables est la composition liquide de caoutchouc de silicone à adhérence sélective selon l'une quelconque des revendications 1 à 6.
